# EUROPEAN PATENT APPLICATION

(11) **EP 1 550 972 A2**
(43) Date of publication of application: **06.07.2005**
(21) Application number: 04258050.6
(22) Date of filing: 22.12.2004
(51) Int. Cl.: G06F 17/60

(54) **Information supply terminal and method**

(30) Priority: 26.12.2003 JP 2003433544
(71) Applicant: Sega Corporation, Ohta-ku, Tokyo 144-8531 (JP)
(72) Inventor: Shimoda, Noriyuki c/o Sega Corporation, Ohta-ku Tokyo 144-8531 (JP); Nakanishi, Wataru c/o Sega Corporatoin, Ohta-ku Tokyo 144-8531 (JP); Kihara, Taku c/o Sega Corporation, Ohta-ku Tokyo 144-8531 (JP); Katagiri, Daichi c/o Sega Corporation, Ohta-ku Tokyo 144-8531 (JP); Osaki, Makoto c/o Sega Corporation, Ohta-ku Tokyo 144-8531 (JP)
(74) Representative: Billington, Lawrence Emlyn

(57) **Abstract**

There are provided an information supply terminal (1) and method, which address the problem that it has previously been impossible to offer paid-for contents and the like to information terminals (2) without requiring access authentication based on previous registration of user information. An object of the present invention is to provide an information supply terminal (1) and method for offering contents to an information terminal (2) without requiring network connection authentication based on previous registration of user information when a user accesses the information supply terminal (1) storing contents, by means of the information terminal (2). An information terminal (2) selected by means of an input section provided in the information supply terminal (1) is identified, on the basis of terminal identification information that is unique to the information terminal (2) of the user, and paid-for contents are sent from the information supply terminal (1) to the selected information terminal (2) by means of radio communications.

## Description

### BACKGROUND OF THE INVENTION

### 1. Field of the Invention

The present invention relates to an information supply terminal for supplying contents to information terminals, installed in a location where a plurality of unspecified users are gathered, and to an information supply method.

### 2. Description of the Related Art

In recent years, various types of information (contents) have started to be delivered to information terminals, such as PCs (Personal Computers), PDAs (Personal Digital Assistants), mobile telephones, games devices, and the like, via networks. In this delivery a server connected to a network (the server being a PC, PDA, or the like) previously stores the contents to be delivered. When the user accesses the server from an information terminal via the network, the user downloads the contents. For example, software (programs), which is one example of delivered contents, is provided via a server connected to the Internet. Furthermore, methods for accessing a server from an information terminal, via an access point of a wireless LAN (Local Area Network), have already been introduced.

When the user accesses a server storing contents by means of an information terminal, firstly, network connection authentication is carried out in order to connect to the network. This involves, for example, user authentication when making a dial-up connection to an ISP (Internet Service Provider), or user authentication when connecting to an access point of a wireless LAN. This network connection authentication (user authentication) judges whether or not to permit the user to access the,network, on the basis of previously registered user information, and in many cases, this judgment is made by checking whether or not a login name and password input by the user when accessing the network coincide with a previously registered name and password.

When the user accesses a server providing paid contents, charge authentication is also carried out. Known methods for charge authentication include a method where a credit card number is entered via the information terminal, a method where a pre-paid card number is entered, and a method where a password is entered (in this case, for example, payment is settled at a later date together with the call fees of the mobile telephone). Prior art technology relating to charge authentication is disclosed in Japanese Patent Laid-open No. 2002-315058 that shows the wireless Internet access system to make payment of connection fees to a wireless LAN access point.

### SUMMARY OF THE INVENTION

However, in the prior art example, when paid contents are acquired by (downloaded to) an information terminal, then it is necessary to perform both network connection authentication and charge authentication. In network connection authentication, a user who has not registered previously will not be able to download contents. The procedure to apply a registration is complicated for the user. And there may be a time delay from the registration application until the time which the user can actually start to use the services. Therefore, even if a user makes an application, he or she will not be able to connect to the network straight away.

Furthermore, some of the paid contents have a low price (of the order of several hundred Japanese yen). In many cases, contents of this kind are directed at minors (children under adult age) who are not able to use credit cards, and therefore if a credit card is used for charge authentication, there will be users who are not able to download these paid contents. Even if pre-paid cards are used, this cannot be regarded as creating a situation where all users can make use of the paid contents freely.

In this way, there remains scope for improvement, with respect to the fact that those able to receive conventional content supply services by means of network connection authentication and charge authentication are limited to previously registered users, and the fact that even in cases where only a small price needs to be paid, users who are not freely able to use credit cards, pre-paid cards, or the like, such as minors, cannot download paid contents to an information terminal. Therefore, it is an object of the present invention to provide a method for supplying paid contents by let the user download to an information terminal, without requiring network connection authentication based on the previous registration of user information.

According to a first aspect of the present invention, the aforementioned object is achieved by providing an information supply method implemented in an information supply system containing an information supply terminal and a plurality of information terminals which communicate with said information supply terminal if located in a communication-possible range where the information supply terminal and the information terminal can communicate each other. The information supply terminal has a transmission and reception unit preparing a radio communication function, a storage unit of storing a plurality of contents and price information for above plurality of contents, a settlement unit of performing a settlement process, a display unit of outputting information to user and an input unit of inputting the user instruction. The information terminal has a storage unit of storing unique terminal identification information and a transmission and reception unit preparing a radio communication function. The method includes transmitting above terminal identification information to above information supply terminal when above information terminal is located in above communication-possible range, and storing above terminal identification information received from above information terminal to the storage unit of the information supply terminal. If a use start instruction is input through above unit, the method includes outputting the terminal identification information of above information terminals capable of communicating with above information supply terminal among terminal information stored in the storage unit of the information supply terminal, on above display unit. If any terminal identification information is selected among the outputted terminal identification information, the method includes identifying the information terminal corresponding to the selected terminal identification information, and outputting above plurality of contents on said display unit. If any content is selected among above outputted contents, the method includes performing a settlement process using above settlement unit based on price information corresponding to the selected content, and sending above selected content to the information terminal specified by above selected terminal identification information when the settlement process has succeeded.

According to a second aspect of the present invention, the aforementioned object is achieved by providing a information supply method according to the first aspect of the invention, wherein said plurality of contents are offered for respective application programs and wherein the storage unit of said information terminal further stores application information to identify said application programs. The method further includes transmitting the application information to the information supply terminal when the information terminal is located in the communication-possible range, storing the application information received from the information terminal in association with the terminal identification information, to the storage unit of the information supply terminal, and outputting, if any terminal identification information is selected among the outputted terminal identification information, the content relating to the application information associated with the selected terminal identification information and the price information for the content, on the display unit.

According to a third aspect of the present invention, the aforementioned object is achieved by providing a information supply method according to the first aspect or second aspect of the invention, wherein the information supply terminal changes the outputted contents, in accordance with the number of the information terminals situated within the communication-possible range. According to a fourth aspect of the present invention, the aforementioned object is achieved by providing a information supply method according to the first aspect or second aspect of the invention, wherein the storage unit of the information terminal further stores group information to identify a group. The method further includes transmitting the group information to the information supply terminal when the information terminal is located in the communication-possible range,andstoring the group information received from the information terminal in association with the terminal identification information, to the storage unit of the information supply terminal. If a group use start instruction is input through said input unit, the method further includes outputting the group information corresponding to the groups to which the information terminals capable of communicating with the information supply terminal belong, among group information stored in the storage unit of the information supply terminal, on the display unit. If any group information is selected among the outputted group information, the method further includes identifying the information terminal belonging to the group corresponding to the selected group information, and sending the selected content to the information terminal specified by the selected group information when the settlement process has succeeded.

According to a fifth aspect of the present invention, the aforementioned object is achieved by providing a information supply method according to the first aspect or second aspect of the invention, wherein said information terminal further has a notification unit of notifying the user of the fact that said information terminal has entered into said communication-possible range. The method further includes transmitting information for activating the notification unit to the information terminal, when the information terminal has entered into the communication-possible range.

According to a sixth aspect of the present invention, the aforementioned object is achieved by providing an information supply method implemented in an information supply system containing a server which includes a plurality of contents and price information for the plurality of contents, an information supply terminal which can communicate with the server via connected network and a plurality of information terminals which communicate with the information supply terminal if located in a communication-possible range where the information supply terminal and the information terminal can communicate each other. The information supply terminal has a transmission and reception unit preparing a radio communication function, a storage unit of storing information, a settlement unit of performing a settlement process, a display unit of outputting information to user and an input unit of inputting the user instruction. The information terminal has a storage unit of storing unique terminal identification information and a transmission and reception unit preparing a radio communication function. The method includes transmitting the terminal identification information to the information supply terminal when the information terminal is located in the communication-possible range and storing the terminal identification information received from the information terminal to the storage unit of the information supply terminal. If a use start instruction is input through said input unit, the method includes outputting the terminal identification information of the information terminals capable of communicating with the information supply terminal among terminal information stored in the storage unit of the information supply terminal, on the display unit. If any terminal identification information is selected among the outputted terminal identification information, the method includes identifying the information terminal corresponding to the selected terminal identification information, acquiring the plurality of contents stored in the server by the information supply terminal's communicating with the server and outputting the acquired plurality of contents on the display unit. The method includes performing, if any content is selected among the outputted contents, a settlement process using the settlement unit based on price information corresponding to the selected content and sending the selected content to the information terminal specified by the selected terminal identification information when the settlement process has succeeded.

According to a seventh aspect of the present invention, the aforementioned object is achieved by providing an information supply terminal terminal which communicates with a information terminal if the information terminal is located in a communication-possible range where the information supply terminal and the information terminal can communicate each other, including a transmission and reception unit preparing a radio communication function, a storage unit of storing a plurality of contents and price information for said plurality of contents, a settlement unit of performing a settlement process, a display unit of outputting information to user, an input unit of inputting the user instruction, and a control unit. The control unit controls: storing to the storage unit a terminal identification information to uniquely identify the information terminal transmitted when the information terminal is located in the communication-possible range; outputting the plurality of contents on the display unit; outputting, if any content is selected among the outputted contents, the terminal identification information of the information terminals capable of communicating with the information supply terminal among terminal information stored in the storage unit, on the display unit; identifying, if any terminal identification information is selected among the outputted terminal identification information, the information terminal corresponding to the selected terminal identification information; performing a settlement process using the settlement unit based on price information corresponding to the selected content; and sending said selected content to the information terminal specified by the selected terminal identification information when the settlement process has succeeded.

According to an eighth aspect of the present invention, the aforementioned object is achieved by providing an information supply terminal according to the seventh aspect of the invention, wherein said control unit also controls changing the outputted contents in accordance with the number of the information terminals situated within the communication-possible range.

According to a ninth aspect of the present invention, the aforementioned object is achieved by providing an information supply terminal according to the seventh aspect of the invention, wherein the control unit further controls: storing to the storage unit an application information to uniquely identify an application program transmitted when the information terminal is located in the communication-possible range; and changing the outputted contents based on the application information.

According to a tenth aspect of the present invention, the aforementioned object is achieved by providing an information supply terminal according to the seventh aspect of the invention, wherein the control unit further controls: storing to the storage unit an group information to uniquely identify an group transmitted when the information terminal is located in the communication-possible range; and changing the outputted contents based on the group information.

By using the method according to the present invention, a user is able to select a content that he or she wants, pay the price corresponding to the selected content and thereby acquire (download) that content to an information terminal, in the same way as a user might purchase a soft drink at a soft drink vending machine, by selecting a soft drink that he or she wants and then depositing the money required for the selected drink. Payment may be made by means of cash or a trading card, or the like. In this way, it is possible to download paid contents where payment is required for each individual content, directly onto an information terminal, without performing network connection authentication based on prior user registration, and without requiring the use of a credit card.

### BRIEF DESCRIPTION OF THE DRAWINGS

Fig. 1 is a diagram is a diagram showing an example of the composition of an information supply system to which the information supply method of the present invention is applied;
Fig. 2 is an external diagram of an information supply terminal in an embodiment of the present invention;
Fig. 3 is a compositional block diagram of an information supply terminal in an embodiment of the present invention;
Fig. 4 shows an example of the data composition of name data sent by an information terminal to the information supply terminal;
Fig. 5 is an example of the data composition of an application identifier (application ID);
Fig. 6 is an example of the data composition of the data stored in the subscriber terminal DB;
Fig. 7 is a diagram showing an example of the data composition of an application database (application DB);
Fig. 8 is a diagram showing an example of the data composition of contents;
Fig. 9 is a compositional block diagram of an information terminal in an embodiment of the present invention;
Fig. 10 is a flowchart showing processing in a case where an information supply terminal offers contents relating to one type of video game;
Fig. 11 is a flowchart showing processing in a case where steps S1 and S2 in Fig. 10 are performed by a DHCP system;
Fig. 12 is a diagram showing an example of the data composition of a transmitted and received data packet;
Fig. 13 is an example of a screen image in an display unit of the information supply terminal;
Fig. 14 is a flowchart showing the operation of an information supply terminal in a case where contents relating to a plurality of video game are offered;
Fig. 15 is a flowchart describing the operation of an information supply terminal in a case where group-orientated contents are offered;
Fig. 16 is an example of a screen image on the display unit of an information supply terminal in a case where a group is being registered;
Fig. 17 is an example of a screen image on the display unit of an information supply terminal in a case where group-orientated contents are transmitted;
Fig. 18 is a compositional block diagram of a contents server according to an embodiment of the present invention; and
Fig. 19 is a flowchart showing processing in a case where a contents server is used.

### DESCRIPTION OF THE PREFERRED EMBODIMENTS

Below, embodiments of the present invention are described with reference to the drawings. However, the technical scope of the present invention is not limited to these embodiments and it also encompasses the inventions described in the claims and equivalents thereof.

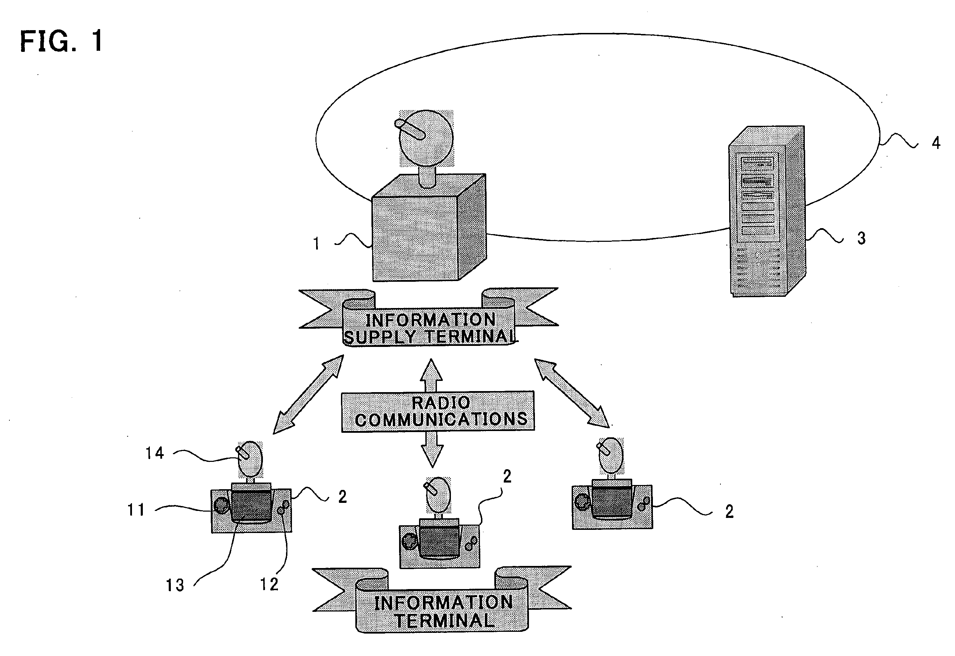

Fig. 1 is a diagram showing an example of the composition of an information supply system to which the information supply system of the present invention is applied. The information supply terminal 1 is, for example, located in a position where an unspecified plurality of people may gather (a convenience store, department store, shopping mall, or the like), and when the information supply terminal is operated by a user in accordance with a menu (contents information) displayed on the display unit of the information supply terminal 1, and a content is selected, then the content stored therein is delivered by radio communications. It is possible to use a terminal, such as a generic PC, or the like, as an information supply terminal, but a dedicated terminal for delivering contents may also be used. A concrete example of an information supply terminal is described hereafter. In Fig. 1, only one terminal is depicted, but there may also be a plurality of information supply terminals.

The information terminal 2 is the destination terminal in the radio communications conducted by the information supply terminal 1, and it downloads and acquires contents delivered by the information supply terminal 1 . Desirably, the information terminal 2 is a portable terminal carried by the user (PDA, mobile telephone, mobile game device, or the like).

The contents stored in the information supply terminal 1 may be managed individually in each of the information supply terminals (individual management), or the contents may be managed by means of a contents server 3 that is connected to the information supply terminal 1 via a network 4 (unified management). The network 4 is a communications network, such as the Internet, a LAN (Local Area Network), or the like.

In the case of individual management, a administrator visits a plurality of information supply terminals and manages the contents therein by adding or deleting contents by means of an input unit (keyboard, mouse, optical disk or other read out device, and the like) provided respectively in each of the information supply terminals. In the case of unified management, contents are managed by means of the administrator adding or deleting contents at a contents server 3. When a content acquisition request is made by a user, the respective information supply terminal 1 acquires the most recent contents from the contents server 3 via the network 4, and offers to the user. In this case, since it is not necessary to hold the contents individually in each information supply terminal 1 and since the contents requested by the user are acquired from the contents server 3 as and when required, then only simple equipment is required in the information supply terminals 1 and hence costs are reduced. Moreover, identification information for identifying information supply terminals 1 is prepared, and by storing different contents for each identification information in the contents server 3, it is also possible to change the contents supplied to each of the information supply terminals.

If there are surplus resources in the device used as the information supply terminal 1 (for example, if the processing capability of the CPU is sufficiently high, if sufficient memory is installed, or if sufficient storage capacity is installed, or the like), then a operation policy may be adopted whereby the information supply terminal 1 accesses the contents server 3 periodically, checks the update status of the contents, and if there is updated content, then it acquires that content via the network 4, in such a manner that the most recent contents are always stored in the information supply terminal 1.

Next the information supply terminal 1 and the information terminal 2 contained in the information supply system are described. The contents server 3 is described hereafter in the description of a case where a contents server is used (unified management).

Firstly, the information supply terminal 1 is described. In the present embodiment, a case where contents relating to a video game are handled is described as an example of the contents.

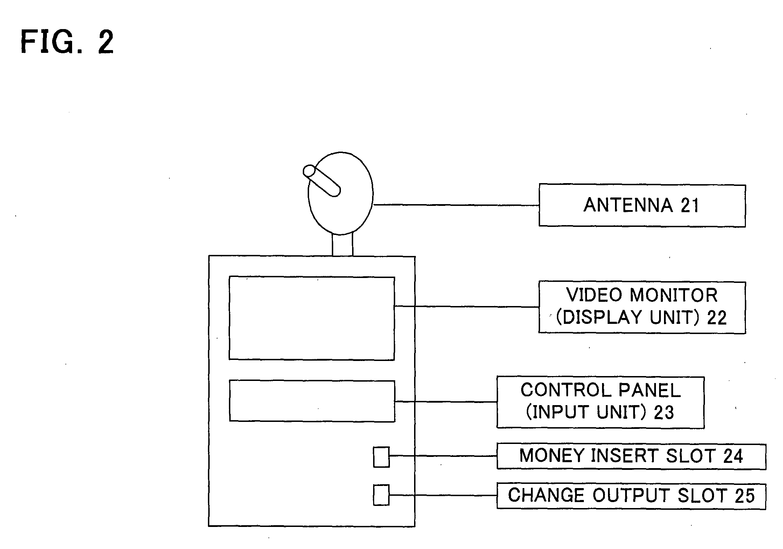

Fig. 2 is an external view (front view) of the information supply terminal 1 in an embodiment of the present invention. The information supply terminal 1 has a video monitor (display unit) 22 and a control panel (input unit) 23 having a keyboard, or the like. If the user selects a menu displayed on the video monitor 22, by operating the control panel 23, then various contents corresponding to this menu are delivered to the information terminal 2.

The information supply terminal 1 includes a radio communications function, which sends contents, such as the newest video game strategy information (text information), or extension programs containing additional new functions (binary information), for example, to the information terminal 2 using antenna 21. Moreover, some of the contents supplied by the information supply terminal 1 include paid contents. If a paid content is to be acquired, the user pays the corresponding cost by means of a pay settlement unit provided in the information supply terminal 1. In Fig. 2, for example, the cost of the content is paid for by means of the user introducing money into a money insert slot 24. Change is output from a change output slot 25. As the settlement unit, it is also possible to use a pre-paid card reading device, a debit card reading device connected to a financial institution via a network, a reading device for electronic money stored in an IC card (IC card reader / writer), or the like.

Furthermore, it is also possible to use a trading card as a pre-paid card. By using trading card as a settlement method, contents can be purchased up to the price of the trading card. The trading card is a card which can be used independently to play a card game, such as a trump game and which is sold by a few hundreds yen per 10 cards. By using a barcode, or the like, printed on the trading card, it is also possible to play a trading card in combination with a video game or a trading game machine. By using trading cards as pre-paid cards in this way, (by means of a trading cards a parent has bought to a child), the child is able to obtain paid contents at the information supply terminal 1 of the present invention, without carrying money with him or her.

Similarly, it is also possible to use the price information recorded on a character figure (for example, a figure sold inside a sealed plastic capsule), and a corresponding reading device, as the settlement unit.

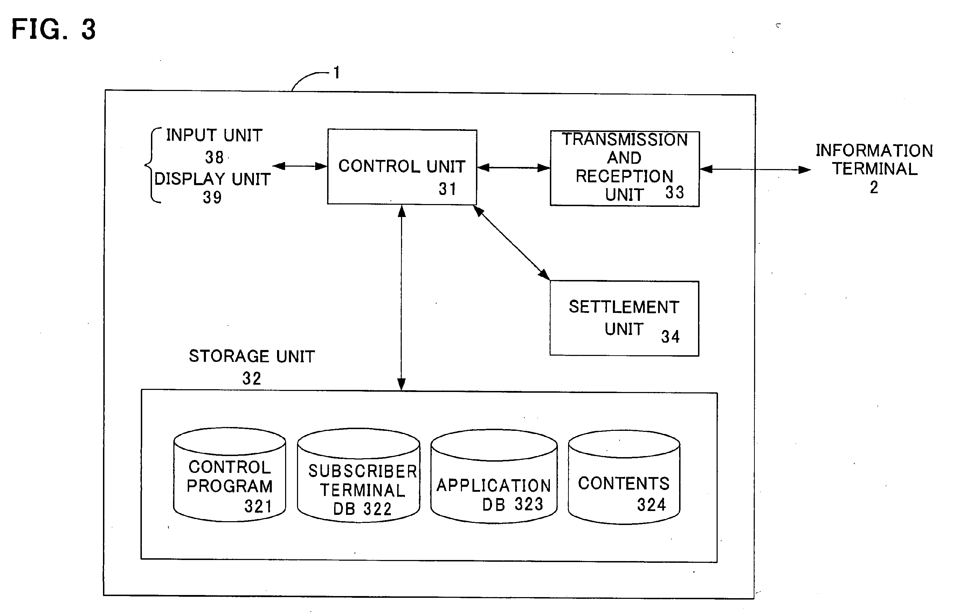

Fig. 3 is a compositional block diagram of an information supply terminal 1 according to an embodiment of the present invention. The information supply terminal 1 involves a control unit 31, a transmission and reception unit 33, a settlement unit 34, a storage unit 32, an input unit 38, and an display unit 39. Each of these functional blocks is achieved by a program, and this program is executed by a CPU (Central Processing Unit) (not illustrated) which is provided in the information supply terminal 1. However, these functions may also be constructed by hardware.

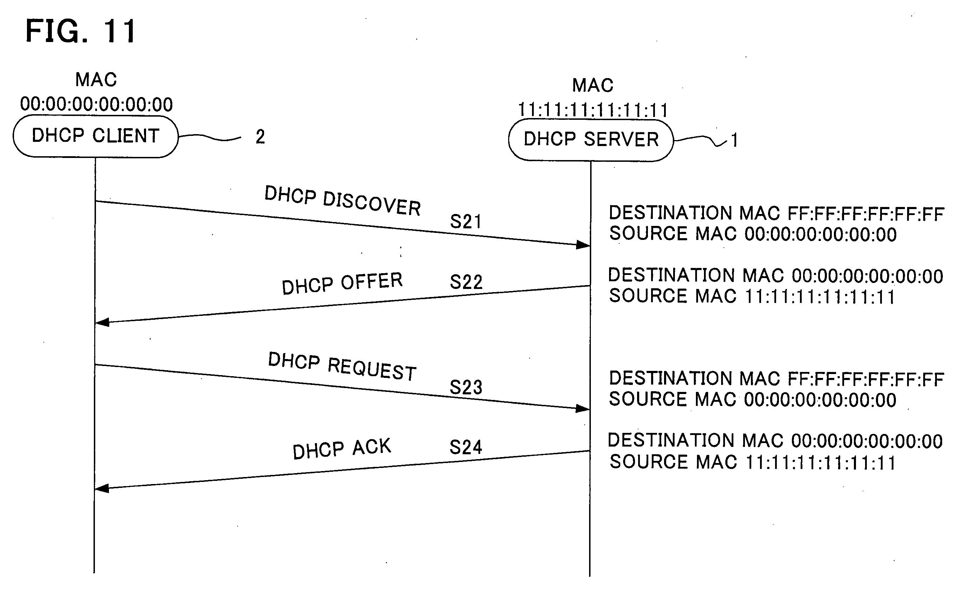

The control unit 31 implements various processes, such as controlling the information supply terminal 1, outputting menus, and the like, to the display unit 39, executing processing in accordance with instructions input from the input unit 38, storing name data input via the transmission and reception unit 33 to a subscriber terminal database (subscriber terminal DB) 322 of the storage unit 32, determining the contents to be delivered on the basis of the results of charge authentication carried out by the settlement unit 34, outputting contents stored in the storage unit 32 to the transmission and reception unit 33 when contents are delivered, and the like. Moreover, in the present embodiment, the control unit 31 functions as a DHCP (Dynamic Host Configuration Protocol) server although the relevant details are described hereinafter (Fig. 11).

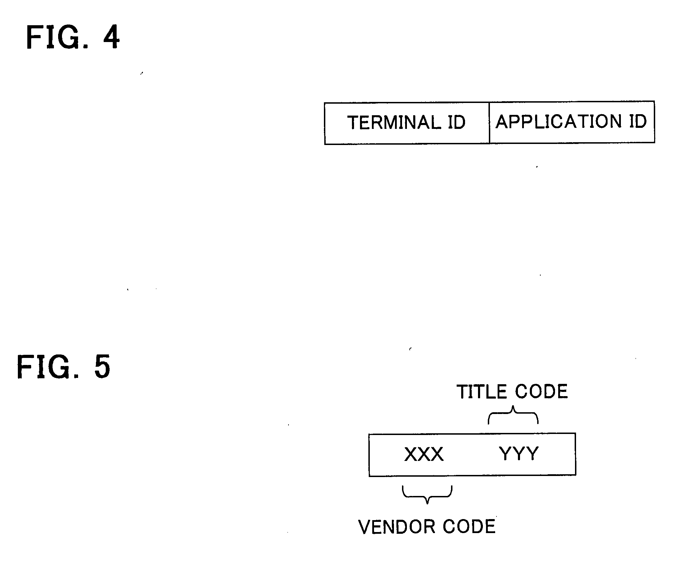

The name data is data sent by the information terminal 2 when it enters into the communications range of the information supply terminal 1. This name data contains terminal identification information for identifying the information terminal 2, and details of this are described hereinafter (Fig. 4). Furthermore, if the contents offered by the information supply terminal 1 include contents of various different types (here, the contents are taken to be contents relating to video games, as one example), then a database (application database (application DB) 323), in which the titles of contents (for example, the titles of video games) are associated respectively with identification information identifying the contents (application identification information), is previously stored in the storage unit 32.

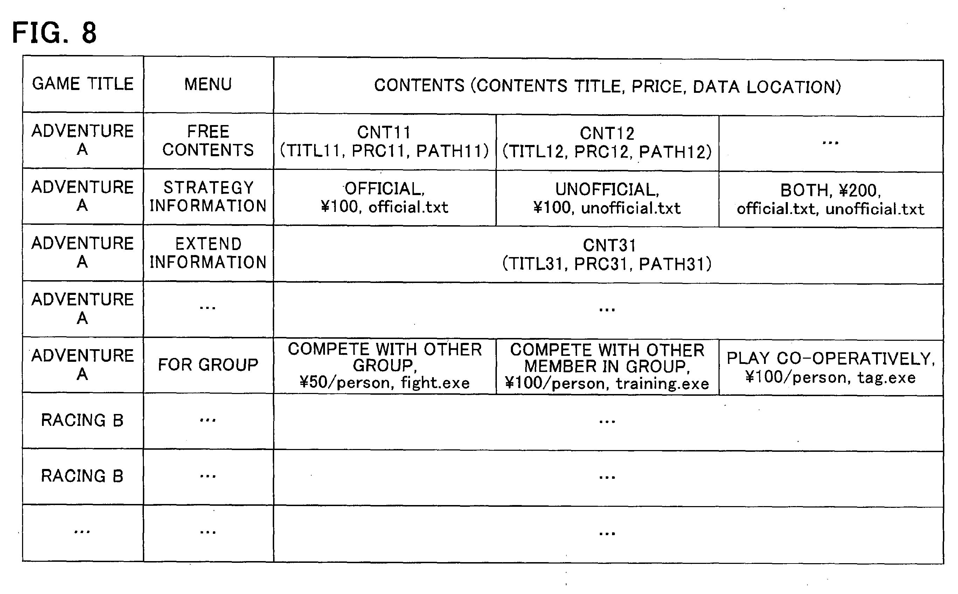

Furthermore, the control unit 31 sends information to the transmission and reception unit 33 indicating that a information terminal that was previously located out of range has entered into the radio communications range of the information supply terminal. Here, "the information indicating that the information terminal has entered into the radio communications range of the information supply terminal" is, more specifically, a notification unit activation instruction for activating a notification unit provided in the information terminal 2 (described later with respect to Fig. 8). Upon receiving this notification unit activation instruction, the information terminal 2 activates the notification unit. Furthermore, it is also possible to send information used in order to evoke the user of the information terminal 2 (for example, a message displayed on the display unit of the information terminal, or a voice message output as sound from the speaker of the information terminal, or the like), together with the notification unit activation instruction.

The transmission and reception unit 33 performs radio communications with the information terminal 2. More specifically, the transmission and reception unit 33 outputs the name data received from the information terminal 2, to the control unit 31. Furthermore, the transmission and reception unit 33 also sends contents, and the like, to the destination information terminal 2. The settlement unit 34 has a read / write device corresponding to the payment method adopted (namely, money, pre-paid cards, debit cards, or the like), and it reports the result of charge authentication to the control unit 31. Besides this, it also implements other necessary processes, such as outputting change, updating the magnetic information on the pre-paid card, reporting a debit amount to a financial institution, or the like.

The storage unit 32 contains a control program 321, a subscriber terminal database (subscriber terminal DB) 322, an application DB 323, and contents 324, and the like. The storage unit 32 is a storage device such as a hard disk, non-volatile memory, or the like. The subscriber terminal DB 322 stores the name data transmitted by the information supply terminal 1. The contents 324 is a location for storing contents.

The input unit 38 is an input device used when the user inputs instructions and when contents are input, and it corresponds to the control panel 23 shown in Fig. 2, for example. In addition, it is also possible to provide a keyboard, mouse and a drive for optical disks, such as CD-ROMs, or the like. The display unit 39 is indicating means for displaying information to the user, namely, a display device such as a CRT, liquid-crystal display, or the like. This corresponds to the video monitor 22 in Fig. 2, for example.

The input unit is not limited to inputs performed by physical contact. Moreover, the display unit is not limited to a unit that displays information visually. For example, instead of a visual display, speakers may be used as the display unit and the menu may be read out by means of a voice. A microphone may be used as the input unit and a menu may be selected by means of voice commands from the user.

In this way, the control unit 31 of the information supply terminal 1, the transmission and reception unit 33, and the storage unit 32 function as content supply unit for the information terminal 2.

Next, the data composition of the subscriber terminal DB 322, the application DB 323 and the contents 324 respectively stored in the storage unit 32 of the information supply terminal 1 will be described. Firstly, name data will be described as data relating to the subscriber terminal DB 322.

Fig. 4 shows an example of the data composition of name data sent by the information terminal 2 to the information supply terminal 1. The name data contains a terminal identifier (terminal ID) which is identification information unique to a particular terminal, and furthermore, an application identifier (application ID) is also associated with the terminal ID. The terminal ID is an identifier for specifying the information terminal 2, for example, a MAC (Media Access Control) address, mobile telephone number, fixed IP address, or the like, that is unique to the communications device. Furthermore, it is also possible to use an identifier that has been allocated temporarily (for example, an IP address allocated by a DHCP server, or the like).

In the present invention, an application ID is an identifier for identifying a video game that is being executed on the information terminal 2. By identifying the video game executed on the information terminal 2 by means of the application ID, it is possible to cause the information supply terminal 1 to display contents corresponding to that video game. Furthermore, it is also possible to judge whether or not the delivered contents can be executed on the destination information terminal 2. In this way, it is possible to prevent contents that cannot be played from being delivered to inappropriate information terminals by mistake.

Fig. 5 is an example of the data composition of an application ID. The application ID is information for identifying a video game that is executed on the information terminal 2, and in Fig. 5, this application ID includes of a vendor code assigned to a game vendor, and a title code that identifies the game title uniquely among the games of that game vendor. Besides the example shown in Fig. 5, it is also possible to use information relating to a game executed in the information terminal 2 (for example, the vendor name and the game title) stored in the form of text as an application ID.

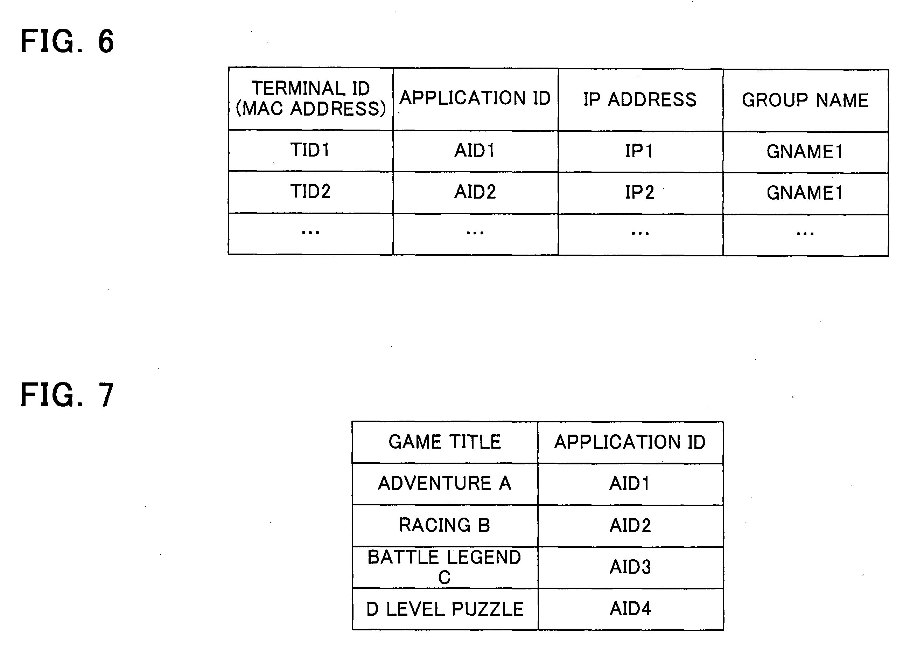

Fig. 6 is an example of the composition of the data stored in the subscriber terminal DB 322 in Fig. 3. The subscriber terminal DB 322 in Fig. 6 contains data headings such as "terminal ID", "IP address", "application ID", and "group name".

The "terminal ID" and "application ID" are the same as those contained in the name data in Fig. 4. Upon receiving name data from the information terminal 2, the information supply terminal 1 checks whether or not that same terminal ID has already been stored in the subscriber terminal DB 322, and if it has not yet been stored, then the information supply terminal 1 adds a corresponding new entry to the subscriber terminal DB 322.

The "IP address" is an IP (Internet Protocol) address associated with the terminal ID, and in the present embodiment, for example, the control unit 31 functions as a DHCP (Dynamic Host Configuration Protocol) server and the IP address allocated by the DHCP server is stored under "IP address" in Fig. 6. Thereby, when the user has selected a content, the information supply terminal 1 is able to send the content to the information terminal of the user, by using the IP address.

The "group name" is an additional data item, where a name for identifying a group is stored, if a group is formed by a collection of a plurality of users. Groups can be established at the information supply terminal 1. A motive for establishing a group may be, for example, to play a miniature game which requires the participation of a prescribed number of people or to get special items that cannot be obtained by playing a normal video game by wining a competition being held between groups.

Fig. 7 is a diagram showing an example of the data composition of the application DB 323 stored in the storage unit 32. Game titles (game names) assigned to games, and application identification information (application IDs) for identifying games are mutually associated in this database. Different application IDs are provided for each different game title, and hence the application IDs are never duplicated. More specifically, in Fig. 7, the application ID for "Adventure A" (AID1) and the application ID for "Racing B" (AID2) are different.

Fig. 8 is a diagram illustrating an example of the composition of data in the content region 324 stored in the storage unit 32. Here, the data items "game title", "menu" and "contents" are stored. Under "game title", the game titles offered by the information supply terminal 1 are stored. "Menu" indicates the menus offered for each game title. One or a plurality of "contents" are associated with each "menu", and by selecting a menu, the user can acquire one or a plurality of contents associated with the menu.

In the data item "contents", one or a plurality of groups containing a content titles, a price, and a data storage location, are stored. The content title is a name which helps the user to understand the nature of the content, and the price is the amount of money required in order to acquire that content. The data storage location is the path to the file where the content data is stored.

More specifically, in Fig. 8, it can be seen that the menus "free contents", "strategy information", "extend information", and "for group", at least, are offered for the game title "Adventure A". The "strategy information" menu includes for example, an "official information (100 yen)" content, an "unofficial information (100 yen)" content, and content containing both official and unofficial information (200 yen). If the user selects "official" from the "strategy information" menu, and pays 100 yen, then the text file called "official. txt" indicated by the data storage location is transmitted to the user's information terminal 2. Moreover, if the option "compete with other group" has been selected from the "for group" menu and payment for a corresponding number of people has been made, then the program called "fight. exe" is executed in the information supply terminal 1, and the data and programs necessary for competition are transmitted to the information terminals 2 of the participants.

Next, the information terminal 2 included in the information supply system according to the present embodiment will be described. In the present embodiment, the information terminal 2 in the information supply system shown in Fig. 1 is a portable game terminal on which game programs are executed. Each respective information terminal 2 has a radio communications function and is able to communicate with the other information terminals 2 and the information supply terminal 1 by means of the radio communication antenna 14. The information terminal 2 has a cross-shaped key 11 and buttons 12 forming an input unit whereby the user inputs instructions, and it has a liquid crystal display 13 as an display unit for indicating information to the user.

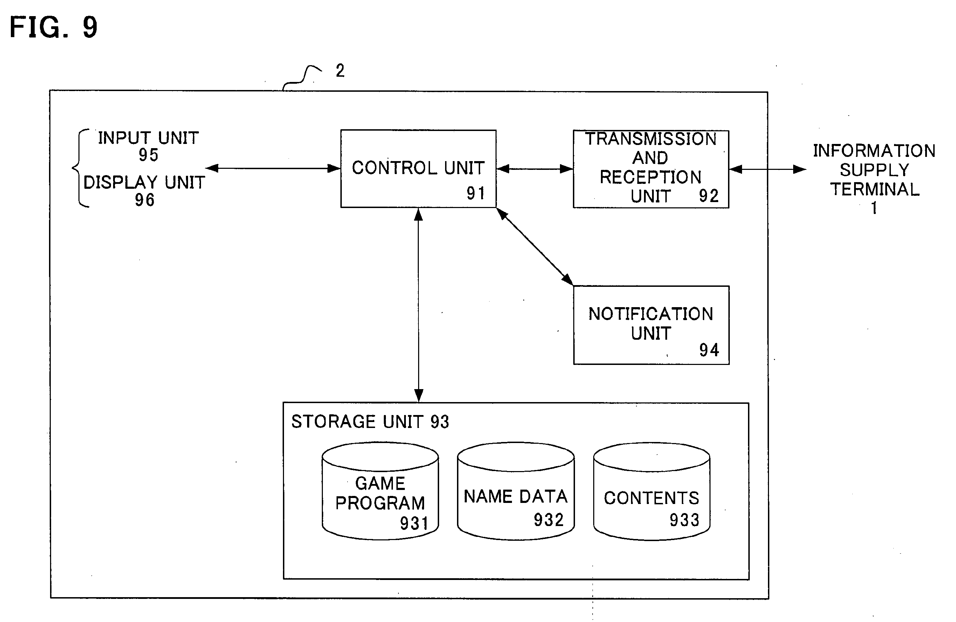

Fig. 9 is a compositional block diagram of an information terminal 2 according to this embodiment of the present invention. The information terminal 2 has a control unit 91, a transmission and reception unit 92, a storage unit 93, a notification unit 94, an input unit 95 and an display unit 96. Each of these functional blocks is achieved by a program, and this program is executed by a CPU (Central Processing Unit) (not illustrated) which is provided in the information terminal 2. However, these functions may also be constructed by hardware.

The control unit 91 implements various processes, such as controlling the information terminal 2, outputting the progress of the game on the display unit 96, carrying out processing in accordance with instructions input via the input unit 95, storing contents input via the transmission and reception unit 92 to the storage unit 93, outputting name data to the transmission and reception unit 92 when the information terminal 2 has entered into the communications range of an information supply terminal 1, and activating a notification unit 94 to evoke the user, when information reminding that the information terminal has newly entered into the radio communications range of an information supply terminal has been received. In the present embodiment, the control unit 91 functions as a DHCP client although the related details are described hereinafter.

The transmission and reception unit 92 carries out radio communications with the information supply terminal 1. The transmission and reception unit 92 outputs contents sent from the information supply terminal 1, to the control unit 91, and sends name data (see Fig. 4) input from the control unit 91, to the information supply terminal 1. The storage unit 93 includes a game program 931, name data 932, contents 933 or the like. The storage unit 93 is a storage device, such as a hard disk, non-volatile memory, or the like.

The notification unit 94 notifies the user that the information terminal has newly entered into the radio communications range of an information supply terminal, on the basis of a notification unit activation instruction sent by the information supply terminal 1. For example, the notification unit 94 creates a message for evoking the attention of the user by being displayed on the display unit 96, or a sound message for attracting the attention of the user by means of a voice output from a speaker (not illustrated), or alternatively, it causes the information terminal to vibrate by rotating an eccentric weight (not illustrated) by means of a motor. Moreover, any combination of these means may be used. If the aforementioned display message and the voice message are received together with the aforementioned notification unit activation instruction, then the notification unit 94 may use these messages, rather than creating new messages.

The input unit 95 is an input device whereby the user inputs instructions and whereby contents can be input. This corresponds to the cross-shaped key 11 and the button 12 in Fig. 1, for example. Besides this , it is also possible to provide a keyboard, mouse, and a drive for optical disks, such as CD-ROMs, or the like. The display unit 96 is an indicator device for displaying information to the user, and this corresponds to the liquid crystal display screen 13 in Fig. 1, for example. The input unit is not limited to inputs performed by physical contact. Moreover, the display unit is not limited to displaying information visually. For example, instead of a visual display, speakers may be used as the display unit and the menu may be read out by means of a voice. A microphone may be used as the input unit and instructions may be input by means of voice commands from the user.

Next, an operation for acquiring (downloading) a content stored in the information supply terminal 1, to the information terminal 2, in the information supply system described above, will be explained. Here, cases of "individual management" wherein contents are managed independently in each information supply terminal, without using a contents server, and "unified management" wherein contents are managed via a contents server, will be considered. Firstly, a case where"individual management" is used will be described.

### (Individual management, one type of contents)

Moreover, in order to simplify the description, the operation and the composition of the data relating to the operation are described with respect to a case where the information supply terminal 1 offers contents relating to one type of video game only. It is assumed that the contents have already been input to the information supply terminal 1 via the input unit 38 illustrated in Fig. 3.

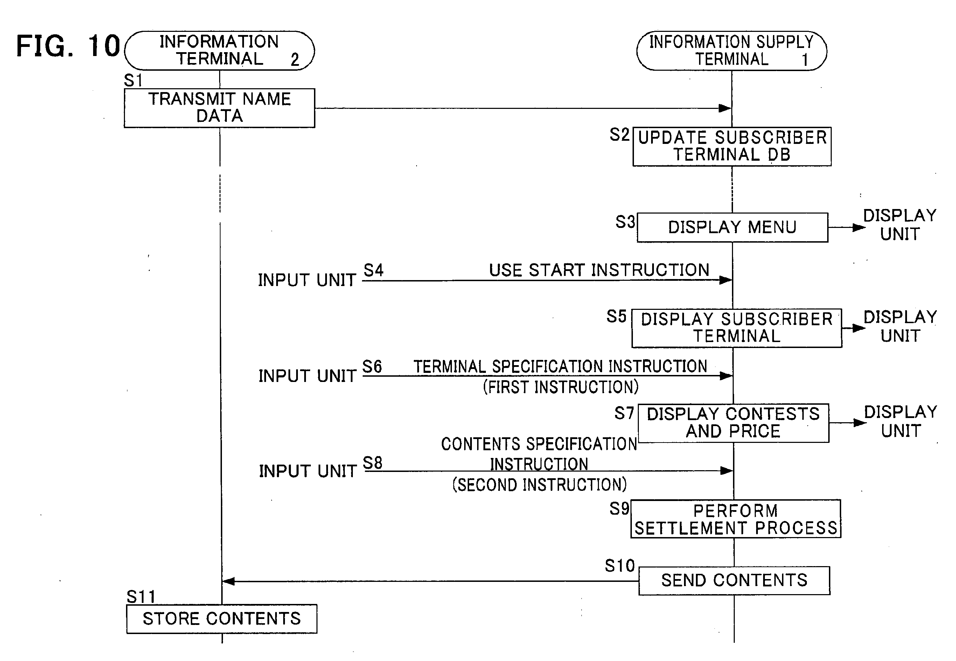

Fig. 10 is a flowchart showing processing in a case where an information supply terminal 1 offers contents relating to one type of video game. Upon entering into the communications range of the information supply terminal 1, the information terminal 2 transmits name data containing terminal identification information that identifies the information terminal 2, and informs the user that there is an information supply terminal within its radio communications range (S1). The name data is stored previously in the storage unit 93 of the information terminal 2 in the data structure illustrated in Fig. 4, for example. Thereupon, the information supply terminal 1 updates the subscriber terminal DB 322 by adding the name data thus received (S2). In the present embodiment, the processing in step S1 and step S2 is carried out in the following manner by means of DHCP functions.

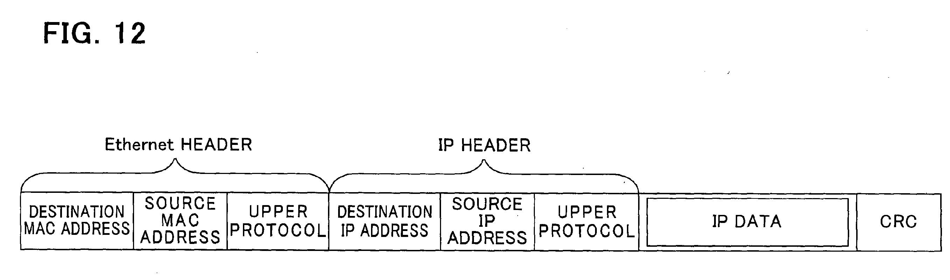

Fig. 11 is a flowchart showing the processing implemented when steps S1 and S2 are carried out by using DHCP functions. Fig. 12 shows the data composition of the packets transmitted and received in the processing in Fig. 11. As an example, an IP packet is depicted. In the description of Fig. 11, reference to Fig. 12 is also made when necessary. In the example shown here, the MAC address of the information supply terminal 1 functioning as a DHCP server is taken to be "11:11:11:11:11:11" and the MAC address of the information terminal 2 functioning as a DHCP client is taken to be "00:00:00:00:00:00".

Firstly, the DHCP client (information terminal 2) broadcasts a DHCP DISCOVER packet to the network (S21). In step S21, the control unit 91 of the information terminal 2 functioning as a DHCP client generates a DHCP DISCOVER packet, and this DHCP DISCOVER packet is transmitted via the transmission and reception unit 92. In Fig. 11, this packet is broadcast by using a destination MAC address (see Ethernet header in Fig. 12) of FF:FF:FF:FF:FF:FF.

If there is a DHCP server in the network to which the packet is broadcast, then the DHCP server responds with a DHCP OFFER packet (S22). In step S22, firstly, the DHCP DISCOVER packet received by the transmission and reception unit 33 of the information supply terminal 1 is output to the control unit 31, and this control unit 31, which functions as a DHCP server, transmits a DHCP OFFER packet via the transmission and reception unit 33. The IP data in the DHCP OFFER packet (see Fig. 12) contains an IP address selected from a list of free IP addresses stored in the DHCP server (information supply terminal 1), and the use of that IP address is proposed to the DHCP client (information terminal 2).

The DHCP client (information terminal 2) re-broadcasts the DHCP REQUEST packet in order to declare that it agrees to use the proposed IP address (S23). In step S23 , the DHCP OFFER packet received by the transmission and reception unit 92 of the information terminal 2 is output to the control unit 91, and this control unit 91 generates a DHCP REQUEST packet and transmits that DHCP REQUEST packet via the transmission and reception unit 92.

Upon receiving this DHCP REQUEST packet, the DHCP server (information supply terminal 1) deletes the IP address which has been declared for use, from the list of free IP addresses, and it stores the IP address declared for use and the MAC address of the DHCP client (information terminal 2) in a mutually associated fashion in the subscriber terminal DB 322 of the storage unit 32, while also sending a DHCP ACK packet to the DHCP client (information terminal 2) (S24). In step S24, firstly, the DHCP REQUEST received by the transmission and reception unit 33 of the information supply terminal 1 is output to the control unit 31, and this control unit 31 generates a DHCP ACK packet and transmits the DHCP ACK packet via the transmission and reception unit 33. Thereupon, the DHCP client (information terminal 2) communicates by using the IP address declared for use at step S23.

The DHCP ACK packet issued in step S24 can also be used as a notification unit activation instruction. For example, the operation of broadcasting the DHCP DISCOVER packet in step S21 is performed when the power supply of the information terminal is switched on, or at a prescribed interval after switching on the power supply. Upon receiving DHCP ACK in step S24, the transmission and reception unit 92 notifies the control unit 91 that the information terminal 2 is in a state which permits communications with the information supply terminal 1, and consequently, the control unit 91 activates the notification unit. By outputting a image or text information indicating that the information terminal is inside the radio communications range of a information supply terminal, on the display unit 96 of the information terminal 2, or by outputting a voice message from a speaker (not illustrated), activating a vibrator (not illustrated), or a combination of these methods, the notification unit 94 performs a notification function for evoking the user that the information terminal is in a state that permits communications with an information supply terminal 1.

A use period is set for the IP address assigned by the DHCP server, and if no extension request (DHCP REQUEST) is made by the DHCP client (information terminal 2) before this use period expires, then that IP address is released. When the IP address is released, that IP address is restored to the free IP address list in the DHCP server and the entry corresponding to the released IP address is deleted from the subscriber terminal DB 322. In this way, when the information terminal 2 enters into the communications range of the information supply terminal 1, then an IP address is allocated and the name data of the information terminal 2 is added to the subscriber terminal DB 322, whereas when the information terminal 2 moves outside the communications range of the information supply terminal 1, the IP address is released and the name data is deleted from the subscriber terminal DB 322. In this way, the subscriber terminal DB 322 is updated as the information terminal 2 moves.

In the aforementioned process, if the information terminal 2 doesn't enter into the communications range of an information supply terminal 1, the DHCP server (information supply terminal 1) does not respond to the DHCP DISCOVER packet that is broadcast.

Therefore, in Fig. 10, when the information terminal 2 enters into the communications range of the information supply terminal 1, name data(see Fig. 4) is transmitted (S1), then the IP address associated with that MAC address is stored in the subscriber terminal DB 322 at the information supply terminal 1 that has received the name data, thereby updating the subscriber terminal DB (see Fig. 6) (S2). In this way, the IP address and the terminal ID and application ID contained in the name data are stored in the subscriber terminal DB 322. In this case, the group name is initialized to empty data ("Null"), or the like. For the terminal identification information (terminal ID), in addition to the MAC address used in the present embodiment, it is also possible to use the mobile telephone number, the IP address allocated by the DHCP server, or the like, as the terminal ID by storing IP data (see Fig. 12) and exchanging this data.

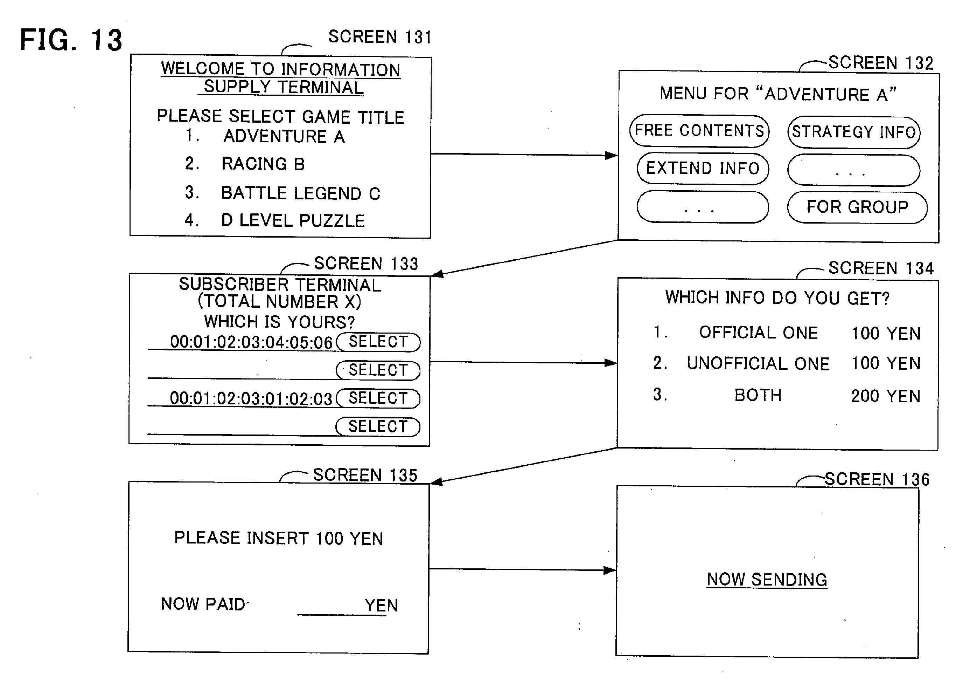

The description is now continued returning to Fig. 10. In the following explanation, reference to Fig. 13 is made when necessary, which is an example of the screen of the display unit (video monitor) 39 of the information supply terminal 1.

At the information supply terminal 1, a menu screen relating to the contents to be offered is displayed via the display unit (S3, screen 132 in Fig. 13). In screen 132, by selecting the "free contents" menu, it is possible to introduce contents that can be obtained free of charge into the information terminal 2. By selecting the "extend information" menu, it is possible to download a game program providing additional items and functions. By selecting the "strategy information" menu, it is possible to obtain information offered by other players, such as strategic hints relating to the video game. By selecting " for group" , it is possible to obtain contents designed for groups, in a case where a plurality of information terminals 2 are formed into one group.

The selection of the menu (contents information) on the screen 132 can be performed by means of the input unit (control panel) 38. For example, by operating the keys of the control panel 23, the user moves the cursor to the menu to be selected and then presses a confirm button, thereby making the selection. Alternatively, it is also possible to make the video monitor 22 itself function as the input unit 38 by adopting a touch screen panel. Here, it is supposed that "strategy information" has been selected. With this selection, a use start instruction is input to the control unit by means of the input unit 38 (S4).

Upon receiving this input at step S4, the control unit 31 accesses the subscriber terminal DB 322 stored in the storage unit 32 and outputs the terminal IDs stored in the subscriber terminal DB 322 at that time to the display unit 39(S5). In the present embodiment, the MAC address forming the terminal ID is displayed (see screen 133 in Fig. 13). The information displayed is not limited to the MAC address. Besides this, as the terminal ID, it is also possible to use the mobile telephone number, the IP address allocated by the DHCP server, the information contained in the name data, the host name, free text information, set in the information terminal, and the like. This information can be exchanged between the information terminal 2 and the information supply terminal 1 as IP data (see Fig. 12).

On the screen 133, it is possible to identify the information terminal used by the user, by pressing the "select" button alongside one of the displayed MAC addresses. The selection of the information terminal on screen 133 is performed in a similar manner to the selection on screen 132. Accordingly, when the "select" button is pressed, a terminal specification instruction including the terminal ID (a first instruction) is input to the control unit 31 via the input unit 38 (S6). If there is only one terminal ID stored in the subscriber terminal DB, then the information terminal that is to receive the delivery of contents is identified immediately by the terminal ID, and hence steps S5 and S6 are omitted and step S7 is executed after step S4.

Upon receiving the input at step S6, the control unit 31 outputs the contents corresponding to the "strategy information" menu, and their prices, to the display unit 39 (S7). The contents and prices in step S7 are contained in the contents 324 of the storage unit 32. (In this way, the control unit 31 and the storage unit 32 function as supply unit for supplying contents to the information terminal 2 via the transmission and reception unit 33.) In the present embodiment, three selections are permitted, namely, official information (100 yen) which is published officially by the game manufacturer, unofficial information (100 yen) where ideas and experiences from other players are presented as text information, or both the official and unofficial information (see screen 134 in Fig. 13). The contents displayed at step S7 may change according to the number of information terminals 2. By counting the number of terminal IDs stored in the subscriber terminal DB 322, it is possible to ascertain the number of information terminals 2 capable of communicating with the information supply terminal 1. As the number of people gathered near an information supply terminal 1 increases, if contents that are difficult to obtain are offered by the information supply terminal, user attraction ability of the information supply terminal 1 increases. If the contents are to be changed in accordance with the number of information terminals gathered near information supply terminal, then it is sufficient to previously store a plurality of contents corresponding to levels of the number of terminals in the storage unit 32.

Contents desired by the user are downloaded into the information terminal 2 by selecting a number displayed on the screen 134. The selection of the number displayed on the screen 134 is performed in a similar manner to the selections on the screen 132 and the screen 133. Accordingly, when a number displayed on the screen 134 is selected, a contents specification instruction (second instruction) is input to the control unit 31 via the input unit 38 (S8).

Upon receiving the input at step S8, the control unit 31 waits for payment of the price corresponding to the selected contents to be carried out via the settlement unit 34 (S9). For example, if the number "1" (official) is selected on the screen 134, then a screen such as that illustrated by screen 135 in Fig. 13 is displayed.

When the settlement unit 34 reports that the amount paid by means of cash, a pre-paid card, or the like, has reached the price, then the control unit 31 sends the content identified at step S8 via the transmission and reception unit 33 to the information terminal 2 identified at step S6 (S10, screen 136 in Fig. 13). At step S10, the control unit 31 searches the subscriber terminal DB 322 for the terminal ID contained in the terminal specification instruction input at step S6, generates a packet having a destination IP address set to the IP address corresponding to the terminal ID thus found in the subscriber terminal DB, and it sends this packet via the transmission and reception unit. The packet sent at step S10 is received by the transmission and reception unit 92 of the information terminal 2 (see Fig. 9), input to the control unit 91, and is then stored in the storage unit 93 (S11). In this way, download of the content is completed.

The flowchart shown in Fig. 10 and the screen examples shown in Fig. 13 are merely examples, and in particular various modes of processing after displaying the menu screen are possible. For example, the subscriber terminals, the contents and the prices may be displayed on the same screen, and the processes from steps S5 to S8 may be carried out in one operation. Moreover, the settlement operation (S9) may be performed after delivery of the content (S10).

However, if settlement is carried out after delivery of the content, then there may be a user who acquires the content without paying the price, and therefore it is necessary to take preventative measures whereby, for example, the content only becomes valid when payment has been settled. For these preventative measures, for example, it is possible to adopt a method wherein a data validation flag indicating valid when the bit is 1 and invalid when the bit is 0 is set for the content, the data validation flag for a transmitted content being set to 0 before payment is settled and data for changing the data validation flag to 1 being sent from the information supply terminal to the information terminal after payment has been settled.

Moreover, the method for designating the information terminal is not limited to the method in step S6 where the user selects his or her own terminal from the list of displayed subscribed terminals. For example, a method may be adopted wherein, when the use start instruction has been input at step S4, a message for inputting a specified command is displayed on the display unit of the information supply terminal. The user inputs this command to the information terminal, and it is sent to the information supply terminal, which judges whether or not the command sent by the information terminal matches the command displayed on the information supply terminal. If the commands are matching, then the information terminal to which contents are to be delivered is specified. Communications between the information supply terminal and the information terminal are conducted by means of packets as illustrated in Fig. 12, and the information supply terminal is able to acquire an IP address for delivering contents, and the like.

The specified command may be a command that can be input via input unit provided in the information terminal, for instance, a specific sequence of operations using the cross-shaped key and buttons provided in the information terminal (for example, cross-shapedkeyup, down, up, down, button A, button B), a sequence of digits such as an authentication number, or a sequence of text, digits, symbols, such as a password, or the like. Even if there are a plurality of information terminals capable of communicating with the information supply terminal, the information terminals to which the command can be input after the displayed command has been observed, are limited. Moreover, in order to prevent situations where a person steals the command and inputs that command before the proper user, thereby preventing the contents downloaded to an information terminal other than that of the proper user (in other words, in order to prevent contents steal), it is also possible to display the state of progress on the information terminal of the proper user, and to implement interruption countermeasures at the information supply terminal, if the user feels that there is a possibility of contents steal).

As a method for specifying the information terminal, it is also possible to specify the information by establishing a connection by means of a path (wired communications, infrared communications, or the like) that is separate to the radio communications used to send the contents between the information terminal and the information supply terminal, and by sending and receiving information specifying the information terminal by means of that separate path.

### (Individual management, contents of a plurality of types)

Next, the operation in a case where contents relating to a plurality of video games are offered by the information supply terminal 1 will be described. If contents relating to a plurality of video games are offered, then in order to identify which content relating to which video game should be offered, the information supply terminal 1 previously stores an application DB (see Fig. 7) in the storage unit 32, containing game titles and application identification information for identifying those game titles.

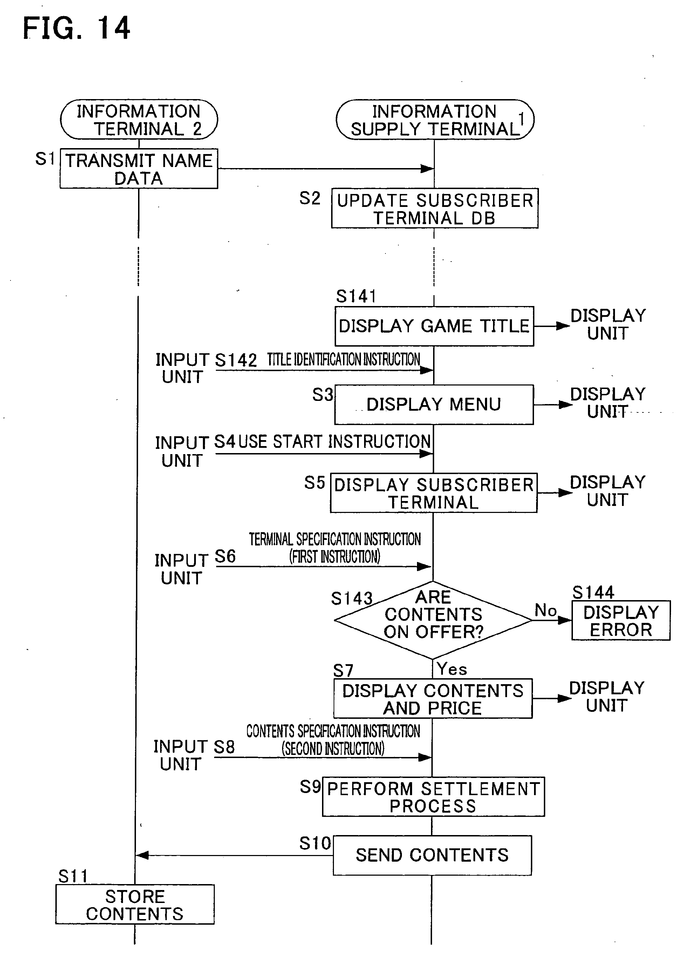

Fig. 14 is a flowchart showing the operation in a case where the information supply terminal 1 offers contents relating to a plurality of video games. In Fig. 14, steps that are the same as those in the flowchart of a case where contents relating to one type of video game are offered (Fig. 10) are labeled with the same step number and description thereof is omitted here.

When an information supply terminal 1 enters into the communications range of the information terminal 2, it transmits name data including terminal identification information for identifying the information terminal 2 (S1). Thereupon, the information supply terminal 1 updates the subscriber terminal DB by adding the received name data (S2). The processes in steps S1 and S2 should be performed by means of a DHCP system, similarly to the case where contents relating to one type of video game are offered (Fig. 10).

In the description of the following steps, reference to Fig. 13 is made when necessary, which shows examples of screen images. Firstly, at the information supply terminal 1, a plurality of video games for which contents are currently offered are displayed via the display unit 39 (S141, screen 131 in Fig. 13). This process differs from the case where contents relating to one type of video game are offered. On screen 131, the titles of four different video games are displayed, and contents relating to those four video games are currently on offer.

The user selects a game title by selecting one of the numbers displayed on the screen 131. The selection of the number displayed on the screen 131 is performed in a similar manner to the selection made at step S4 in Fig. 10 (screen 132 in Fig. 13), at step S6 in Fig. 10 (screen 133 in Fig. 13), or at step S8 in Fig. 10 (screen 134 in Fig. 13). Accordingly, when a number displayed in the screen 131 is selected, a title identification instruction is input to the control unit 31 via the input unit 38 (S142). Here, information designating the game title "Adventure A" is input.

A menu screen of contents currently offered for the game title selected at step S142 is then displayed via the display unit 39 (S3, screen 132 at Fig. 13). When the user selects a menu (content information), a use start instruction is input to the control unit 31 via the input unit 38 (S4). The control unit 31 accesses the subscriber terminal DB 322 stored in the storage unit 32 and outputs the terminal IDs stored in the subscriber terminal DB 322 at that time, to the display unit 39 (S5). When the information terminal is selected by the user, a terminal specification instruction (first instruction) including the terminal ID is input to the control unit 31 (S6). If there is only one terminal ID stored in the subscriber terminal DB, then the information terminal of the contents delivery destination can be identified immediately from that terminal ID, and hence steps S5 and S6 are omitted and step S143 is carried out after step S4. The processes in steps S3 to S6 are the same as those in Fig. 10.

Upon receiving the first instruction at step S6, the control unit 31 judges whether or not the information supply terminal 1 is offering contents relating to a game program (application) that is executed in the information terminal 2 (S143). The control unit 31 searches the subscriber terminal DB 322 on the basis of the terminal ID contained in the first instruction obtained at step S6, and it acquires an application ID for the information terminal 2 matching that terminal ID.

The control unit 31 then searches the application DB 323 (Fig. 7) on the basis of the game title identified by the title identification instruction input at step S142, and it acquires an application ID for the game title matching that game title, and compares this with the previously acquired application ID. If the two IDs are not matching (No at S143), then an error message informing the user that the game title selected at the information supply terminal 1 is different from the game title executed on the information terminal 2, is output to the display unit 39 (S144).

If the two IDs are matching (Yes at S143), then the contents corresponding to the menu (content information) selected at step S4, and their related prices, are displayed (S7). The contents and prices displayed at step S7 are contained in the contents 324 of the storage unit 32 (in this way, when a contents server is used, the control unit 31 and storage unit 32 function as supply unit for supplying contents to an information terminal 2 by means of the transmission and reception unit 33).

The contents displayed at step S7 may be changed according to the number of information terminals. By counting the number of terminal IDs stored in the subscriber terminal DB, it is possible to ascertain the number of information terminals capable of communicating with the information supply terminal. As the number of people gathered near an information supply terminal increases, if contents that are difficult to obtain are offered by information supply terminal, user attraction ability of the information supply terminal increases. If the contents are to be changed in accordance with the number of information terminals gathered near information supply terminal, then it is sufficient to previously store a plurality of contents corresponding to levels of the number of terminals in the storage unit.

Thereupon a content specification instruction ( second instruction) is input via the input unit 38 (S8), and when a payment completion report for the price has been input via the settlement unit 34 (S9), then the control unit 31 sends the content identified at step S8, to the information terminal 2 specified at step S6, via the transmission and reception unit 33 (S10). The content sent at step S10 is received by the transmission and reception unit 92 of the information terminal 2, input to the control unit 91 and then stored in the storage unit 93 (S11). The processing in steps S7 to S11 are similar to those in the case of Fig. 10.

The flowchart shown in Fig. 14 and the screen image examples shown in Fig. 13 are merely examples, and in particular various modes of processing after displaying the menu screen are possible. For example, the subscriber terminals, the contents and the prices may be displayed on the same screen, and the processes from steps S5 to S8 may be carried out in one operation. Moreover, the settlement operation (S9) may be performed after delivery of the content (S10). Similarly to the case described in Fig. 10, preventative measures may also be introduced in such a manner that the content only becomes valid after payment has been settled. Alternatively, it is also possible to implement processing whereby the content is transmitted when it has been judged whether or not sufficient free storage capacity can be secured in the storage unit 93 of the information terminal.

Fig. 14 shows a case where a content has been sent to one information terminal 2. Next a case where a plurality of information terminals 2 are formed into one group and contents used between groups or within a group are sent to the plurality of information terminals 2 belonging to the group, via the information supply terminal 1 is described.

### (Individual management, group contents)

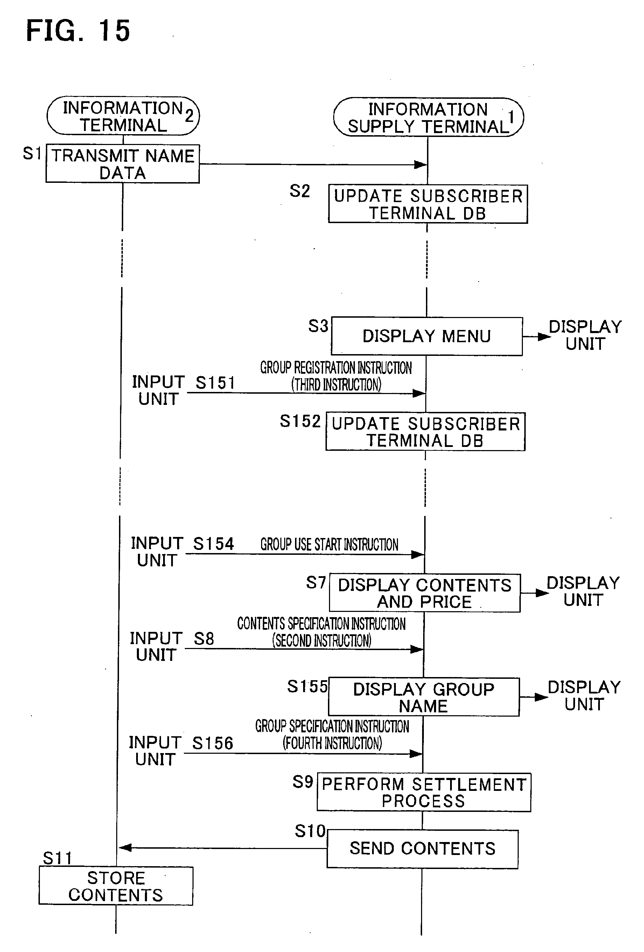

Fig. 15 is a flowchart for describing the operation of an information supply terminal 1 in a case where contents are sent to a plurality of information terminals 2 belonging to a group. In this case, it does not matter whether the information supply terminal 1 offers contents relating to one type of video game or contents relating to a plurality of video games, but for the purpose of the simplification, it is assumed here that it offers contents relating to one type of video game. Steps which are the same as those in the similar flowchart relating to a case where contents relating to one type of video game are offered (Fig. 10) are labeled with the same step numbers and description thereof is omitted.

When the information terminal 2 enters into the communications range of the information supply terminal 1, it transmits name data containing terminal identification information for identifying the information terminal 2 (S1). Subsequently, the information supply terminal 1 updates the subscriber terminal DB 322 by adding the received name data (S2). The processes in steps S1 and S2 should be performed by means of a DHCP system, similarly to a case where contents relating to one type of video game are offered (Fig. 10).

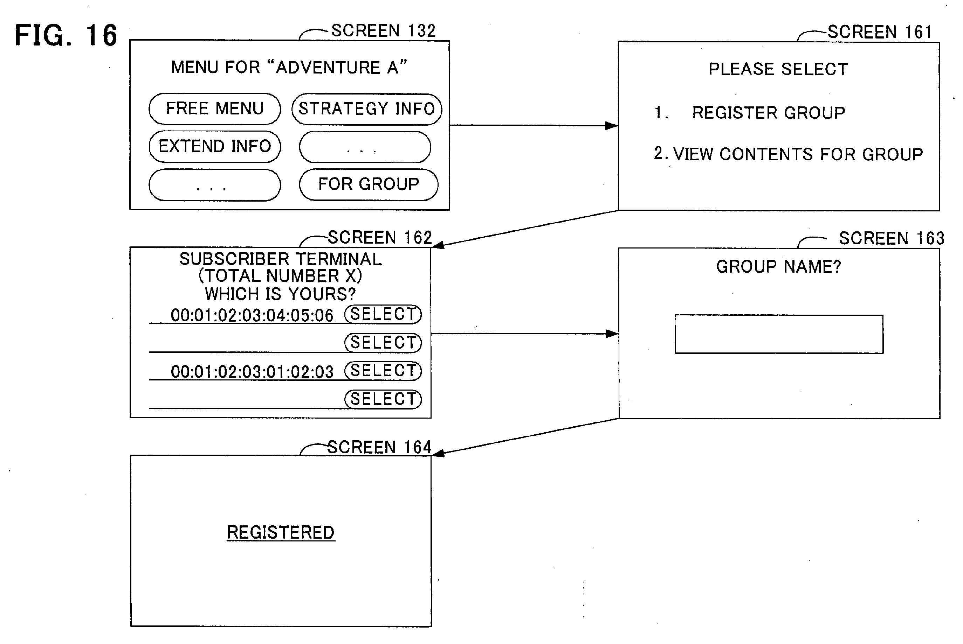

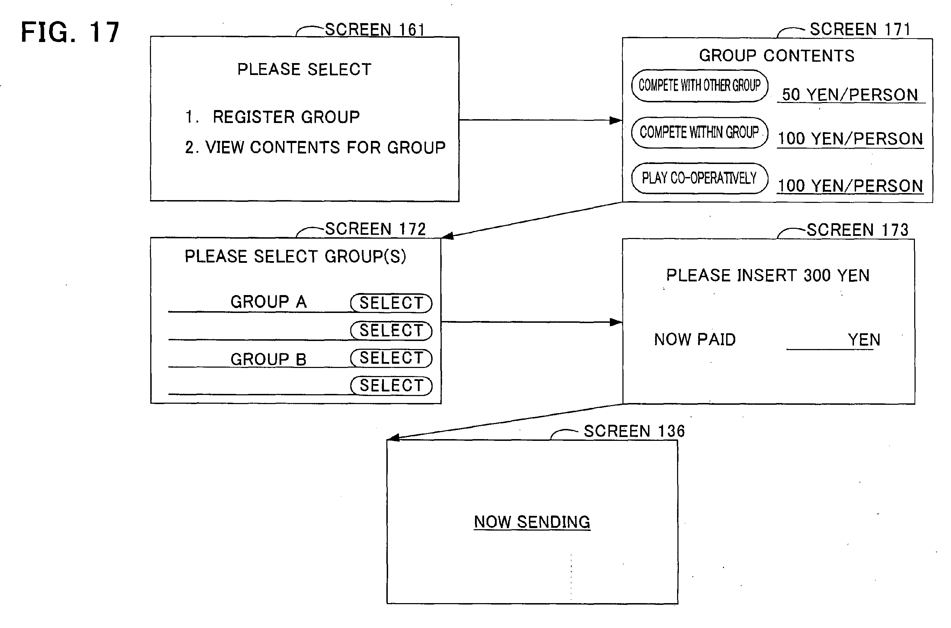

In the following description, reference to Fig. 16 and Fig. 17 is made when necessary, which are examples of the screen of the display unit 39. At the information supply terminal 1, a menu screen relating to the contents currently offered is displayed via the display unit 39 (S3, screen 132 in Fig. 16). Screen 132 in Fig. 16 is the same as screen 132 in Fig. 13. Moreover, step S3 in Fig. 15 is the same as step S3 in Fig. 10.

If "for group" is selected on screen 132, then sub-menus are displayed, namely, "register group" for registering the members (information terminals 2) making up a group and setting the group name, and "view contents for group" for displaying the group contents offered to the group (screen 161 in Fig. 16). If "register group" is selected on screen 161, then a register group instruction is input to the control unit 31 via the input unit 38, whereas if "view contents for group" is selected, then a group use start instruction is input to the control unit 31 via the input unit 38.

If a group does not exist, then group-orientated contents are not transmitted, and therefore, it is supposed that "register group" is selected first. Accordingly, on screen 161, the number "1" is selected, whereby a register group instruction is input to the control unit 31 via the input unit 38 (S151).

Upon receiving the input at step S151, the control unit 31 accesses the subscriber terminal DB 322 stored in the storage unit 32, and outputs the terminal IDs stored in the subscriber terminal DB 322 at that time, to the display unit 39 (screen 162 in Fig. 16). The user selects a plurality of terminal IDs of the information terminals that are to belong to the same group, from the list of terminal IDs displayed. The terminal IDs thus selected are input to the control unit 31 via the input unit 38.

Thereupon, a screen for entering a group name is displayed (screen 163 in Fig. 16), and a group name is input to the control unit 31, via the input unit 38 provided in the information supply terminal 1. The control unit 31 then searches the subscriber terminal DB 322 (see Fig. 6) and updates the subscriber terminal DB 322 by storing the group name input on the screen 163 in the group name column corresponding to the selected terminal IDs (S152, screen 164 in Fig. 16).

Next, it is supposed that "view contents for group" is selected on screen 161. Accordingly, number "2" is selected on screen 161, whereby a group use start instruction is input to the control unit 31 via the input unit 38 (S154). Upon receiving the input at step S154, the control unit 31 outputs group-orientated contents and their prices, to the display unit 39 (S7). The contents and prices in step S7 are contained in the contents 324 of the storage unit 32 (in this way, when a content server is used, the control unit 31 and the storage unit 32 function as supply unit for supplying contents to the information terminals 2 via the transmission and reception unit 33).

In the present embodiment, it is possible to select either contents for competing with another group ("compete with other group"), or contents for competing with other information terminals 2 belonging to the same group ("compete within group"), or contents whereby a common problem is presented to information terminals 2 belonging to the same group in such a manner that users can resolve the problem by playing in a co-operative manner ("play co-operatively") (screen 171 in Fig. 17). The group may be encouraged actively to use the information supply terminal 1 because the contents for group includes information which indicates special items given to the winning group in the case of a competition with another group or the winner in the case of a competition within a group, or groups when they resolve a problem.

Besides this, as group-orientated contents, it is also possible to downloaded special marks (for instance, a coat of arms or special symbols) designed specially for each group, to the information terminals belonging to that group. The mark may be displayed on the display unit of the information terminal and respective groups may compete to create the most attractive design. In this way, the information supply terminal 1 can be used to encourage communication in the real world.

The contents displayed at step S7 may be changed according to the number of information terminals. By counting the number of terminal IDs stored in the subscriber terminal DB, it is possible to ascertain the number of information terminals capable of communicating with the information supply terminal. As the number of people belonging to any of groups increases, user attraction ability of the information supply terminal increases. If the contents are to be changed in accordance with the number of terminals, then it is sufficient to previously store a plurality of contents corresponding to levels of the number of terminals in the storage unit.

When a content is selected on the screen 171, a content specification instruction (second instruction) is input to the control unit 31 via the input unit 38 (S8). Steps S7 and S8 are the same as steps S7 and S8 in Fig. 10. Upon receiving the input in step S8, the control unit 31 accesses the subscriber terminal DB 322 stored in the storage unit 32 and displays the group name (S155, screen 172 in Fig. 17). On the screen 172, the user selects a group corresponding to the selected content. For example, if "compete with other group" content has been selected on screen 171, then the user selects another group to form an opponent, as well as his or her own group. In other cases, the user's own group only is selected.

When the group is selected on the screen 172, a group specification instruction (fourth instruction) is input to the control unit 31 via the input unit 38 (S156). Upon receiving the input at step S156, the control unit 31 waits for the settlement unit 34 to report that payment of the price corresponding to the selected content has been completed (S9, screen 173 in Fig. 17).

When completion of payment has been reported, the control unit 31 accesses the subscriber terminal DB 322, identifies the information terminals 2 belonging to the group specified at step S156, and sends the content specified at step S8 to those information terminals 2 (S10, screen 136 in Fig. 17). The IP addresses of the information terminals 2 belonging to the specified group are stored in the subscriber terminal DB 322, and hence content can be transmitted to those terminals. The content transmitted at step S10 is received by the transmission and reception unit 92 in each information terminal 2, and is input to the control unit 91 and then stored in the storage unit 93 (S11). In this way, download of the content is completed.

The flowchart shown in Fig. 15 and the screen image examples shown in Fig. 16 and 17 are merely examples, and in particular various modes of processing after displaying the menu screen are possible. For example, the contents, the prices, and the group information may be displayed on the same screen, and the processes from steps S7 to S156 may be carried out in one operation. Moreover, the settlement operation (S9) may be performed after delivery of the content (S10). Similarly to the case described in Fig. 10, preventative measures may also be introduced in such a manner that the content only becomes valid after payment has been settled.

When information is supplied using an information supply terminal according to the present embodiment of the invention as described above, the user can purchase contents freely and download into an information terminal, without having to register previously for access. Moreover, for the payment method, apart from cash, it is also possible to use a pre-paid card (including trading cards, or the like), a debit card, or the like, and hence paid contents can be purchased by anyone, regardless of their age. Moreover, a certain effect of people attraction can be anticipated by installing information supply terminals. This is because an information supply terminal forms a core device around which a plurality of users can compete with each other, and furthermore, there is information (contents) which can only be obtained via the information supply terminal.

In the embodiment described above, the function of storing contents and the function of interfacing with the user are both provided by the information supply terminal 1, and therefore, the contents are stored in the information supply terminal 1, but it is also possible to make the function of storing the contents independent by providing a contents server in which a plurality of contents are stored in a centralized fashion. In this case, the storage unit 32 of the information supply terminal 1 is only used to store, temporarily, contents that are to be transmitted to an information terminal 2. Next, a case of "unified management" by means of a contents server will be described.

### (Unified management, one type of content)

In order to simplify the description, the operation and the composition of the data relating to the operation are described with respect to a case where the information supply terminal 1 offers contents relating to one type of video game only.

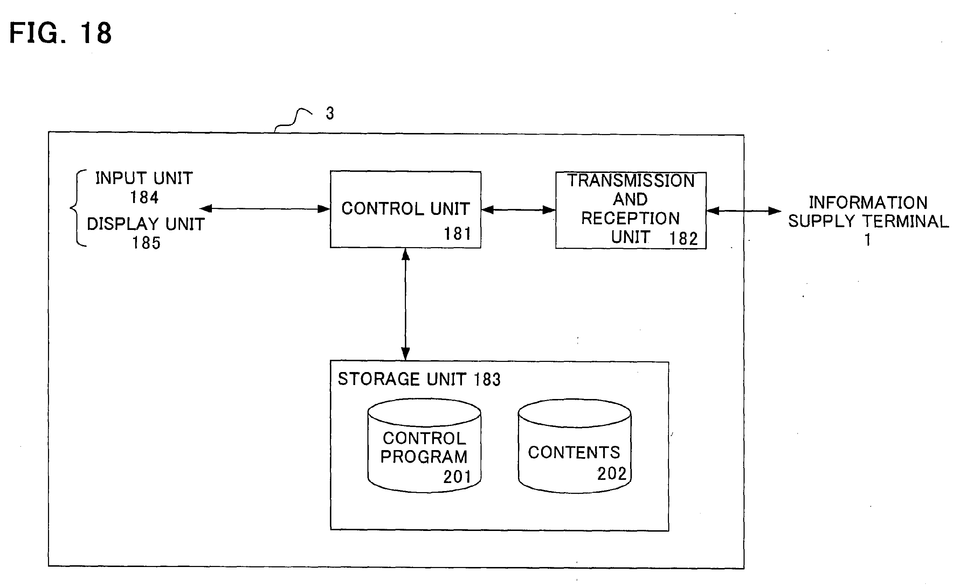

Fig. 18 is a composition block diagram of a contents server 3 in an embodiment of the present invention. The contents server 3 has a control unit 181, a transmission and reception unit 182, a storage unit 183, an input unit 184, and an display unit 185. Each of these functional blocks is achieved by a program, and this program is executed by a CPU (Central Processing Unit) (not illustrated) which is provided in the contents server 3. However, these functions may also be constructed by hardware.

The control unit 181 implements processes, such as controlling the contents server 3, displaying information relating to the contents server 3 on the display unit 185, executing processing in accordance with instructions input via the input unit 184, and outputting contents, and the like, stored in the storage unit 183 in response to requests from information supply terminals 1. The transmission and reception unit 182 performs radio communications with the information supply terminals 1.

The storage unit 183 contains a control program 201 and contents 202. The storage unit 183 is a storage device, such as a hard disk, non-volatile memory, or the like. Contents and price information (which corresponds to the information stored in the contents 324 of the storage unit 32 in Fig. 3) are stored in the contents 202 of the storage unit 183. Here, for the sake of simplicity, it is supposed that one type of video game is offered, but if contents relating to a plurality of video games are offered, then it is possible to store contents respectively for each type of video tame.

The input unit 184 is an input device whereby the user inputs instructions and it is also used when contents are input. For example, the input unit 184 corresponds to a keyboard, mouse and a drive for optical disks, such as CD-ROMs, or the like. The display unit 185 is a display device for displaying information to the user, for example, a liquid crystal display screen, a CRT display, or the like.

Next, an operation where a content stored in the contents server 3 is introduced (downloaded) into the information terminal 2 will be described.

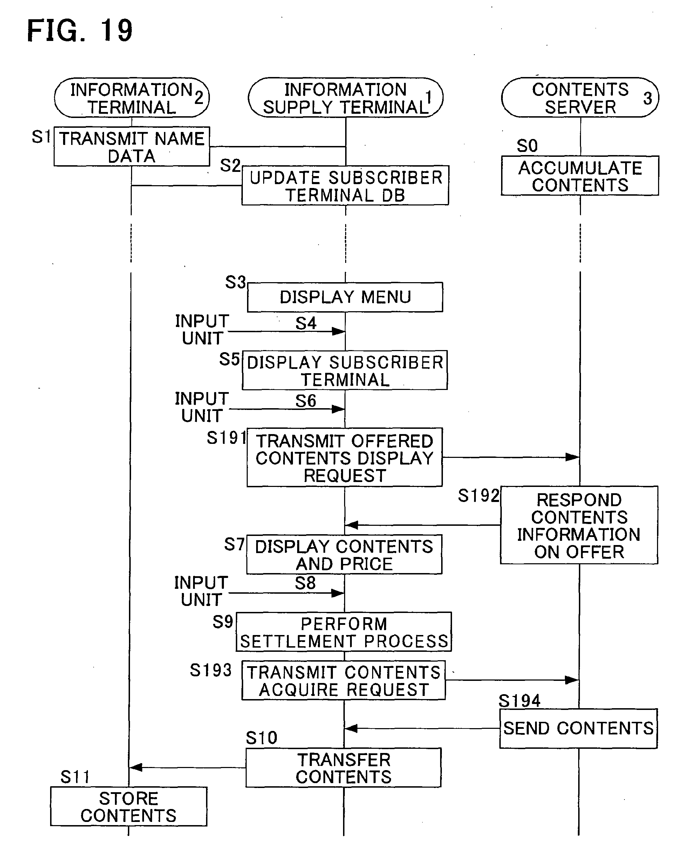

Fig. 19 is a flowchart showing processing in a case where a contents server 3 is used. The contents server 3 and the information supply terminal 1 are connected by means of a network 4, and contents requested by a information terminal 2 are once sent from the contents server 3 to the information supply terminal 1 as required, and the contents are then downloaded to the information terminal 2 via the information supply terminal 1. The contents are updated and managed at the contents server 3. In Fig. 19, steps which are the same as those in the flowchart of a case where contents relating to one type of video game are offered (Fig. 10), are labeled with the same step numbers and description thereof is omitted.

Previously delivered contents are accumulated in the contents server 3 (S0). Contents are input to the contents server 3 by means of the input unit 184 provided in the contents server 3. For example, the administrator of the server sets a storage medium, such as a CD-ROM, or the like, on which contents are recorded, into the disk drive, and copies the contents to the contents server 3, or the user inputs contents directly via a keyboard, or the like.

Next, when an information terminal 2 enters into the communications range of the information supply terminal 1, name data containing terminal identification information for identifying the information terminal 2 is transmitted (S1). Subsequently, the information supply terminal 1 updates the name data thus received by adding that data to the subscriber terminal DB (S2). The processes in steps S1 and S2 should be performed by means of a DHCP system, similarly to the case where contents relating to one type of video game are offered (Fig. 10).

In the description of the following steps, reference to the screen images in Fig. 13 is made when necessary. At the information supply terminal 1, the menu screen relating to the contents currently on offer are displayed via the display unit (S3, screen 132 in Fig. 13). When the user selects a desired menu from the menus (contents information) on the screen 132, by means of the input unit (control panel, or the like) 38 of the information supply terminal 1, a use start instruction is input to the control unit 31 (S4).

The control unit 31 accesses the subscriber terminal DB 322 stored in the storage unit 32 and outputs the terminal IDs stored in the subscriber terminal DB 322 at that point in time, to the display unit 39 (S5). When an information terminal is selected by the user, a terminal specification instruction (first instruction) containing a terminal ID is input to the control unit 31 via the input unit 38 (S6). The processing from step S3 to S6 is similar to the case in Fig. 10.

Subsequently, in order to acquire information relating to the contents currently on offer with respect to the menu selected at step S4, the information supply terminal 1 sends a offered contents display request to the contents server 3 containing the menu selected at step S4 (S191). Upon receiving an offered contents display request, the contents server 3 sends information relating to the contents currently on offer, to the information supply terminal 1 (S192). More specifically, the control unit 181 of the contents server 3 acquires the titles and price information of contents corresponding to the menu selected at step S4 , from the contents stored in the storage unit 183 of the contents server 3, and it sends these to the information supply terminal 1 via transmission and reception unit 182.

Upon receiving information relating to the contents currently offered by the contents server 3 at step S192, the control unit 31 of the information supply terminal 1 outputs the contents currently on offer, and their prices, to the display unit 29 (S7). The information relating to the contents obtained from the contents server is stored temporarily in the storage unit 32 of the information supply terminal 1. A content specification instruction (second instruction) is input via the input unit 38 (S8), and if a price payment completion notification is input via the settlement unit 34 (S9), then the control unit 31 of the information supply terminal 1 reports the content identified at step S8 to the contents server 3, via the transmission and reception unit 33 (S193), and the contents server 3 returns the content thus reported to the information supply terminal 1 (S194).

The information supply terminal 1 then transfers the content sent by the contents server 3 to the information terminal (S10). The content obtained from the contents server is stored temporarily in the storage unit 32 of the information supply terminal 1 (in this way, when a contents server is used, the control unit 31 and the storage unit 32 function as supply unit for supplying contents to the information terminal 2 via the transmission and reception unit 33.) The steps S7, S8, S9 and S10 in Fig. 19 are the same as those in the case in Fig. 10. The content transmitted at step S10 is received by the transmission and reception unit 92 of the information terminal 2, input to the control unit 91, and stored in the storage unit 93 (S11).

When the content server 3 is introduced, even if there are a plurality of information supply terminals 1, the management of the contents in the respective information supply terminals 1 is unified and hence management tasks are reduced. Moreover, since only required contents are stored in the information supply terminals 1, it is possible substantially to prevent misappropriation, theft, destruction, or the like, of the content data.

In this specification, a mode where contents relating to a video game are delivered to an information terminal 2 has been described, but the invention is not limited to contents relating to video games, and films, music, social information (news), or the like, may also be delivered. For example, if news is acquired as a content, then the areas of interest of a user are stored previously in the application IDs (see Fig. 4) contained in the name data, and news matching these areas of interest is send by the information supply terminal. In this way, by downloading contents to an information terminal 2 from an information supply terminal 1, it is possible for a user to acquire contents by paying small sums without having to register previously, and therefore the user can enjoy the use of his or her information terminal 2. For example, if a video game is executed on the information terminal 2, then game data, such as a new maps, items, functions, skills, events, or the like, can be added, and hence the video game can be made more interesting to play.

## Claims

1. An information supply method implemented in an information supply system containing an information supply terminal and a plurality of information terminals which communicate with said information supply terminal if located in a communication-possible range where the information supply terminal and the information terminal can communicate each other,
said information supply terminal having a transmission and reception unit preparing a radio communication function, a storage unit of storing a plurality of contents and price information for said plurality of contents, a settlement unit of performing a settlement process, a display unit of outputting information to user and an input unit of inputting the user instruction,
said information terminal having, a storage unit of storing unique terminal identification information and a transmission and reception unit preparing a radio communication function,
the method comprising:
transmitting said terminal identification information to said information supply terminal when said information terminal is located in said communication-possible range;
storing said terminal identification information received from said information terminal to the storage unit of the information supply terminal;
outputting, if a use start instruction is input through said input unit, the terminal identification information of said information terminals capable of communicating with said information supply terminal among terminal information stored in the storage unit of the information supply terminal, on said display unit;
identifying, if any terminal identification information is selected among the outputted terminal identification information, the information terminal corresponding to the selected terminal identification information;
outputting said plurality of contents on said display unit;
performing, if any content is selected among said outputted contents, a settlement process using said settlement unit based on price information corresponding to the selected content; and
sending said selected content to the information terminal specified by said selected terminal identification information when the settlement process has succeeded.

2. The information supply method according to claim 1,
wherein said plurality of contents are offered for respective application programs and wherein the storage unit of said information terminal further stores application information to identify said application programs,
the method further comprising:
transmitting said application information to said information supply terminal when said information terminal is located in said communication-possible range;
storing said application information received from said information terminal in association with said terminal identification information, to the storage unit of the information supply terminal; and
outputting, if any terminal identification information is selected among the outputted terminal identification information, the content relating to the application information associated with the selected terminal identification information and the price information for the content, on said display unit.

3. The information supply method according to claim 1 or 2,
wherein said information supply terminal changes said outputted contents, in accordance with the number of said information terminals situated within said communication-possible range.

4. The information supply method according to claim 1 or 2,
wherein the storage unit of said information terminal further stores group information to identify a group,
the method further comprising:
transmitting said group information to said information supply terminal when said information terminal is located in said communication-possible range;
storing said group information received from said information terminal in association with said terminal identification information, to the storage unit of the information supply terminal;
outputting, if a group use start instruction is input through said input unit, the group information corresponding to the groups to which said information terminals capable of communicating with said information supply terminal belong, among group information stored in the storage unit of the information supply terminal, on said display unit;
identifying, if any group information is selected among the outputted group information, the information terminal belonging to the group corresponding to the selected group information; and
sending said selected content to the information terminal specified by said selected group information when the settlement process has succeeded.

5. The information supply method according to claim 1 or 2,
wherein said information terminal further has a notification unit of notifying the user of the fact that said information terminal has entered into said communication-possible range,
the method further comprising transmitting information for activating said notification unit to said information terminal, when said information terminal has entered into said communication-possible range.

6. An information supply method implemented in an information supply system containing a server which includes a plurality of contents and price information for said plurality of contents, an information supply terminal which can communicate with said server via connected network and a plurality of information terminals which communicate with said information supply terminal if located in a communication-possible range where the information supply terminal and the information terminal can communicate each other,
said information supply terminal having a transmission and reception unit preparing a radio communication function, a storage unit of storing information, a settlement unit of performing a settlement process, a display unit of outputting information to user and an input unit of inputting the user instruction,
said information terminal having, a storage unit of storing unique terminal identification information and a transmission and reception unit preparing a radio communication function,
the method comprising:
transmitting said terminal identification information to said information supply terminal when said information terminal is located in said communication-possible range;
storing said terminal identification information received from said information terminal to the storage unit of the information supply terminal;
outputting, if a use start instruction is input through said input unit, the terminal identification information of said information terminals capable of communicating with said information supply terminal among terminal information stored in the storage unit of the information supply terminal, on said display unit;
identifying, if any terminal identification information is selected among the outputted terminal identification information, the information terminal corresponding to the selected terminal identification information;
acquiring said plurality of contents stored in the server by the information supply terminal's communicating with the server;
outputting said acquired plurality of contents on said display unit;
performing, if any content is selected among said outputted contents, a settlement process using said settlement unit based on price information corresponding to the selected content; and
sending said selected content to the information terminal specified by said selected terminal identification information when the settlement process has succeeded.

7. An information supply terminal which communicates with a information terminal if the information terminal is located in a communication-possible range where the information supply terminal and the information terminal can communicate each other, comprising:
a transmission and reception unit preparing a radio communication function;
a storage unit of storing a plurality of contents and price information for said plurality of contents;
a settlement unit of performing a settlement process,
a display unit of outputting information to user;
an input unit of inputting the user instruction; and
a control unit
which controls storing to the storage unit a terminal identification information to uniquely identify the information terminal transmitted when said information terminal is located in said communication-possible range,
which controls outputting said plurality of contents on said display unit,
which controls outputting, if any content is selected among said outputted contents, the terminal identification information of said information terminals capable of communicating with the information supply terminal among terminal information stored in the storage unit, on said display unit,
which controls identifying, if any terminal identification information is selected among the outputted terminal identification information, the information terminal corresponding to the selected terminal identification information,
which controls performing a settlement process using said settlement unit based on price information corresponding to the selected content, and
which controls sending said selected content to the information terminal specified by said selected terminal identification information when the settlement process has succeeded.

8. The information supply terminal according to claim 7,
wherein said control unit also controls changing said outputted contents in accordance with the number of said information terminals situated within said communication-possible range.

9. The information supply terminal according to claim 7,
wherein said control unit further controls:
storing to the storage unit an application information to uniquely identify an application program transmitted when said information terminal is located in said communication-possible range; and
changing said outputted contents based on the application information.

10. The information supply terminal according to claim 7,
wherein said control unit further controls:
storing to the storage unit an group information to uniquely identify an group transmitted when said information terminal is located in said communication-possible range; and
changing said outputted contents based on the group information.
